# EUROPEAN PATENT SPECIFICATION

(11) **EP 3 453 653 B1**
(45) Date of publication and mention of the grant of the patent: **19.02.2025**
(21) Application number: 18169004.1
(22) Date of filing: 24.04.2018
(51) Int. Cl.: B65G 47/91, B65G 47/68

(54) **END OF LINE PICK AND PLACE UNIT**
LINIENENDENGREIF- UND -PLATZIERUNGSEINHEIT
UNITÉ BRAS-TRANSFERT D'EXTRÉMITÉ DE LIGNE

(30) Priority: 02.05.2017 EP 17169116; 04.05.2017 EP 17169360
(43) Date of publication of application: 13.03.2019
(73) Proprietor: GEA Food Solutions Germany GmbH, 35216 Biedenkopf-Wallau (DE)
(72) Inventor: Thorsten, Burk, 35232 Dautphetal (DE); James, Cruickshank, GB-Warwickshire B80 7SD (GB)
(74) Representative: Kutzenberger Wolff & Partner

(56) References cited:
- EP-A1- 1 270 462
- EP-A1- 2 341 001
- DE-A1- 4 445 108
- GB-A- 2 297 955
- JP-A- S60 144 237
- US-B2- 7 748 254

## Description

The present invention relates to a method to operate an end of line pick and place unit with an infeed conveyer which transports n packages side by side in one row towards a gripper unit, wherein n is at least 1 and wherein the gripper unit comprises a multitude of grippers which grip at least one package simultaneously, lift it/them, transport it/them and lower it/them on an outfeed conveyor in a row with 1 or n-1 packages side by side or less.

A method according to the preamble of claim 1 is known from the state in the art, for example GB 2 297 955, and are conventionally provided downstream from a packaging machine, particularly a so-called form-fill-seal- packaging machine (FFS-packaging machine), particularly a thermo-former. Such a packaging machines conventionally works intermittently, wherein during one index, an array of packages, a so-called format, with multiple rows and columns of packages, is produced. A row thereby extends perpendicular to the transport direction of the packages, while a column extends parallel to the transport direction of the packages. Downstream from the packaging machine number of columns need to be reduced which is done by the pick and place unit. The pick and place unit picks each package with a gripper unit consisting of at least one gripper, preferable a set of grippers, from an infeed conveyor and places it to an outfeed conveyor in reduced columns, preferably in one column. The end of line pick and place unit according to the state in the art are constructed costly and need too much time for a format change and/or gripper change.

The document US 7,748,254 discloses a method to operate a pick and place unit which is located downstream from a packaging unit, wherein the pick and place unit comprises an infeed conveyor, a gripper unit comprising a multitude of grippers and an outfeed conveyor, wherein the infeed conveyor transports a plurality of packages side by side in a row towards the gripper unit, wherein deficient packages, i.e. packages not properly sealed, are detected,wherein the multitude of grippers grip at least one deficient package, lift it/them, transport it/them and lower it/them on the outfeed conveyor in a row, wherein for lifting, and lowering, the entire gripper unit is moved,wherein the gripper(s) which is/are allocated to a non-deficient package is/are then not activated, so that the non-deficient packages are not lifted together with the gripper unit, but stays on the infeed conveyor,wherein the infeed conveyor further advances with the non-deficient packages.

It is therefore the objective of the present invention to provide a method to operate an end of line pick and place unit and a gripper unit that do not have the deficiencies according to the state in the art.

The problem is attained with a method according to claim 1.

The present invention relates to a method to operate an end of line pick and place units which is provided downstream from a packaging machine, particularly a so-called form-fill-seal- packaging machine (FFS-packaging machine), particularly a thermo-former. Such a packaging machine conventionally works intermittently, wherein during one index, an array, a so-called format of packages, with one or multiple rows and columns, is produced. A row thereby extends perpendicular to the transport direction of the packages, while a column extends parallel to the transport direction of the packages. Downstream from the packaging machine number of columns need to be reduced which is done by the inventive pick and place unit.

The end of line unit comprises an infeed conveyor that transports the packages towards a gripper unit. The packages are conventionally still provided in their format, i.e. in an array with multiple rows and columns. Preferably, the infeed conveyor is a belt, preferably an endless belt, wherein the infeed conveyor is preferably operated intermittently. The movement of the infeed conveyor is controlled by a computer, so that the packages can be placed in a defined position relative to the gripper unit. and/or that the computer knows the exact position of each package on the infeed conveyor. The packages are transported until they each reach a certain position on the infeed conveyor. The infeed conveyor is then preferably stopped. Then, a gripper unit, which comprises one or a multitude of grippers, picks up, preferably lifts, at least one package and places it, preferably lowers it, on an outfeed conveyor. The outfeed conveyor extends preferably parallel to the infeed conveyor, but can be as well in line or under an angle to the infeed conveyor. Preferably, the gripper unit picks up all packages in one column. On the outfeed conveyor, the number of packages side by side in one row is preferably reduced, preferably to one, in comparison to the packages side by side in one row on the infeed conveyor. The outfeed conveyor is preferably a belt, more preferably an endless belt. Each gripper can be activated to provide a force- and/or form-fit between the gripper and a package and deactivated to annul the force- and/or form-fit, preferably individually or group-wise. However, particularly when larger and/or heavy packages need to be lifted and lowered, a multitude of gripper may be needed to transport one package. In this case, a multitude of grippers is activated and deactivated simultaneously. Preferably, the force- and/or form-fit is provided based on vacuum.

Said computer knows which package might be empty and/or faulty and the gripper unit is controlled by the computer, so that the gripper unit picks only the good packages, but not the empty and/or faulty packages. At the earliest when the picked packages are free from the belt and away from possible collision to the still waiting empty and/or faulty packages the empty and/or faulty packages are taken out of the way preferably by moving the infeed conveyor in downstream direction in order to transfer the empty and/or faulty packages to a separate conveyor or into waste boxes. This functionality can be used even if the number of columns shall not be reduced.

According to the present invention, for lifting and lowering the packages not the individual grippers are moved relative to a housing of the gripper unit, but the entire gripper unit is lifted and lowered, while the individual grippers are not actively moved relative to the housing of the gripper unit. The lifting and lowering can be done by every motor means known by the person skilled in the art. Preferably the motor means provides a feed-back signal so that a control system knows the exact position of the gripper unit, particularly regarding the upper surface of the infeed- and/or outfeed conveyor and/or to the upper surface of the package or it is possible that the exact positions can be taught to the control.

Preferably, the gripper unit is reciprocated between a lifting position above the infeed conveyor and a lowering position, preferably above the outfeed conveyor. This movement is preferably a horizontal movement. This movement can be done by every motor means known by the person skilled in the art. Preferably the motor means provides a feed-back signal so that a control system knows the exact position of the gripper unit, particularly regarding the pick-up- and the place-position.

Preferably, a motor with gear box and toothed belt are used for one or both movements of the gripper-unit. The movements of the gripper-unit can be carried out at least timewise simultaneously and/or sequentially.

According to another preferred embodiment of the present invention, the grippers are provided stationary at the gripper unit.

According to this embodiment of the present invention, the grippers are stationary relative to the gripper unit. This does not mean that the grippers do not own a certain flexibility and compress and decompress while being brought in contact with the package and/or released from the package. However, the grippers are not actively moved by a motor, compressor or the like. For lifting and lowering, the gripper unit, at which the grippers are provided, is moved.

Preferably, the gripper unit is provided at a frame and this frame is lowered and lifted together with the gripper unit and relative to the infeed- and/or outfeed conveyor or its frame. This embodiment of the present invention solves as well the problem of reducing the sluggish mass on the preferably horizontal reciprocating movement of the gripper unit between a pick-and a place- position and reducing the acceleration forces on said movement, that need to be taken by the mechanical structure of the pick-and-place unit and that might needed to be hold back from the floor or similar structure, which carries the pick-and-place unit.

Preferably, the end of line unit comprises a guiding means, preferably one or more guiding rod(s) for a horizontal movement of the gripper unit from the pick- to the place position. For the transfer of the packages from the infeed conveyor, the pick position, to the outfeed conveyor, the place position, the gripper unit moves along the guiding means, driven by a motor means.

According to a preferred embodiment, the grippers are vacuum operated, i.e. the vacuum provides the connection between the grippers and the package to be transported.

This embodiment of the present invention deals with a gripper unit, which comprises a housing. The housing preferably comprises and/or is connected to means to lower and lift the housing and/or to move it horizontally. At this housing, a tool is releasably provided that comprises the specific embodiment for a specific application. This invention is based on the idea that depending on the format and the design of the package, a tailormade arrangement of grippers is needed. The gripper configuration can vary in the number of grippers provided per package, the arrangement of the grippers relative to each other and/or the weight each gripper can carry and/or the type of grippers which i.e. depends on the surface and/or shape of the package. Nowadays, one packaging machine are designed to produce a multitude of different packages. In case the package produced is changed, the configuration of the grippers must be changed as well. This can be done fast and easily by changing the tool at which all grippers are provided.

The tool is preferably a plate, which is provided horizontally during use. The grippers are distributed at the plate as needed.

Preferably, the tool does not comprise any moving part. This makes the tool cheap and reduces the weight of the tool.

According to a preferred embodiment, the gripper unit comprises a central connector for the energy, preferably the vacuum, for the grippers. Preferably, the tool comprises tubes provided between the gripper and the central connector. Due to this preferred embodiment of the present invention, the time needed to change the toll can be even more decreased, because the central connector only need to be connected to one single energy source, preferably a vacuum source. The central connector preferably comprises a multitude of tube connections so that each gripper or a group of grippers can be individually energized. The central connector is preferably a universal part for many different applications, but tailor-configured for the tool at which it is provided.

Preferably, the gripper unit comprises a valve-block, preferably at the housing.

Preferably, the gripper unit comprises a plug, preferably at the housing, which supplies each gripper with energy, e.g. vacuum. The plug is connected to the central connector and preferably downstream from the valve-block. The plug preferably comprises a multitude of outlets which are connected to corresponding inlets at the central connector. The valve-block together with the plug determines which outlet is connected to a vacuum source. Preferably, the direction of connecting the plug with the central connector is more or less the same as the inserting direction of the tool, preferably a tool-plate, when it is inserted in its working position at the housing for tool change. Preferably, the plug is automatically connected to the central connector during inserting of the tool in its working position when finishing the tool change and/or automatically unplugged when starting the tool change.

Preferably, guiding means for the tool are provided at the housing. These guiding means can be for example a U-shaped or L-shaped rail, which cooperate with the tool-plate at two opposite ends. During tool-change, the tool is guided by the rails.

Preferably, the tool, e.g. the tool-plate can be moved into a tool carrier and/or tool storage, which is at times placed preferably in corresponding position at the end of the guiding means, in order to make the tool change even faster and/or to reduce the carrying weight for the machine operator.

Preferably, the tool change is done automatically, e.g. by pushing the tool, e.g. tool-plate, out of the housing and into a free spot of the waiting tool carrier and/or tool storage, and then moving the filled spot out of the way and replacing it by another filled spot with the wanted tool, then pulling or pushing this wanted tool out of the tool carrier and/or tool storage and into its working position in the housing.

According to a preferred embodiment of the present invention, the tool comprises identification means to identify the tool. Such an identification can be a FID or a RFID or the like. Due to this identification, it can be excluded, that the wrong tool is installed for a certain application and/or that it is installed in the wrong orientation. The identification can also comprise information how to operate the tool, for example which degree of vacuum is needed for the grippers. Furthermore, the information on the tool can automatically configure the valve block.

The inventions are now explained according to the Figures. These explanations do not limit the scope of protection and apply for all embodiments of the present invention likewise.
- **Figure 1**: shows the inventive end of line pick and place unit (top view)
- **Figures 2 and 4 - 6**: shows gripper unit
- **Figure 3**: shows the grippers

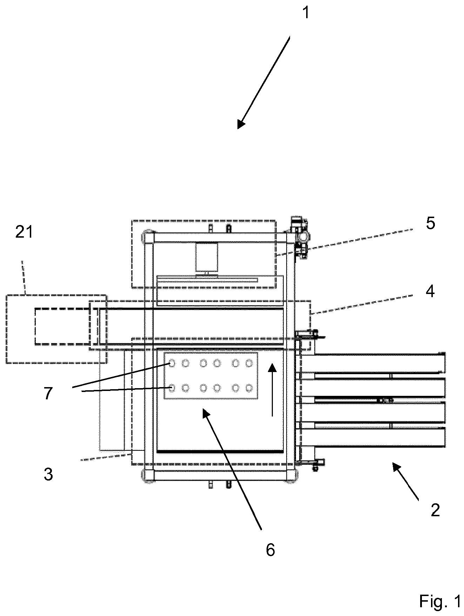

**Figure 1** shows the end of line pick and place unit 1 which is located downstream from a packaging machine and which receives packages here from four lanes, i.e. each row of packages comprises four packages. The end of line pick and place unit 1 comprises an infeed conveyor, here an endless belt which transports the package towards a gripper unit 6, which comprises a multitude of grippers 7, here twelve grippers, which can pick up six packages from two lanes; i.e. two grippers are allocated to one package. For picking up the packages, the gripper unit is lowered until the grippers touch the packages. Then, a vacuum is applied between the packages and the grippers 7. As soon as a sufficient vacuum has been established, the gripper unit is lifted and simultaneous and/or subsequently the gripper unit moves towards the outfeed conveyor 4 as depicted by the arrow. During the connection of the grippers at the package, the infeed conveyor preferably stands still. After and/or while reaching the outfeed conveyor, the packages are lowered again, until they stand on the outfeed conveyor. The outfeed conveyor is in the present case provided as an endless belt. In the present case, the inventive end of line pick and place unit 1 comprises a pusher 5, which is however not demanding. The pusher pushes packages which have been placed on an area before the pusher and beside the outfeed conveyor on the outfeed conveyor after the area of the outfeed conveyor in front of the pusher has been emptied by advancing the outfeed conveyor. Downstream from the outfeed conveyor, there may be a pitching conveyor 21, which can be for example, the interface between the end of line pick and place unit 1 and a subsequent carton packaging machine. The inventive end of line pick and place unit 1 reduces packages in n parallel lanes on the infeed conveyor 3, here four parallel lanes to less, preferably one lane on the outfeed conveyor 4.

The end of line pick and place unit 1 and the packaging machine 2 exchange information for example via a common control system. The information comprise information to synchronize the packaging machine and the end of line pick and place unit 1. For example, information about the index and/or the availability of packages to transferred can be exchanged. The information exchanged also comprise data about packages in a format which need to be sorted out, because, they are not sufficiently filled and/or the quality of the product in the package is not sufficient and/or the package is not properly closed and/or has a gas-atmosphere in the package which is not according to the specification. The end of line pick and place unit 1 gets data about the position of such a package, particularly where it is located on the infeed convey 3. The gripper(s) which is/are allocated to such a deficient package is/are then not activated, e.g. no vacuum is applied to this/these gripper(s), so that the package is not lifted together with the gripper unit, but stays on the infeed conveyor. As soon as the infeed conveyor further advances, this package drops from the infeed conveyor, for example in a waste bin.

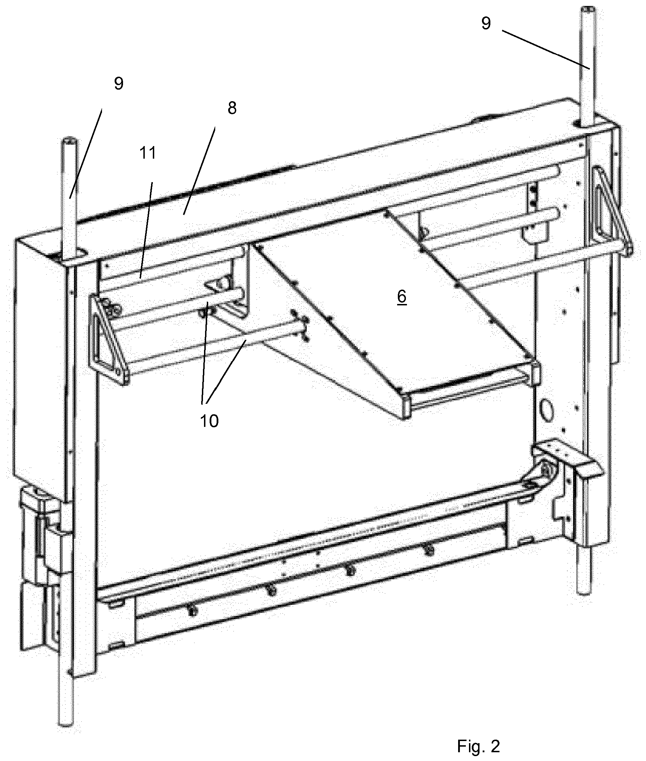

**Figure 2** shows the gripper unit 6. It can be seen that the entire gripper unit is provided at vertical lifting means, here a frame 8 and a guiding means 9, here a guiding rod. For lowering and lifting the gripper unit, here the frame 8 is lowered and lifted by motor means and guided by the guiding means during this movement. The gripper unit is also connected to horizontal guiding means, here two guiding rods 10, along which the gripper unit can reciprocate to transport packages from the infeed- to the outfeed conveyor. The vertical movement and/or the horizontal movement are preferably driven by a motor 11 and a toothed belt. The motor is preferably a motor that provides a signal about the rotational position of its shaft, so that the horizontal and/or vertical position of the gripper unit can be derived.

The grippers of the end of line pick and place unit 1 do not move relative to the gripper unit 6 in which they are provided, but only move together with the housing 20 of the gripper unit.

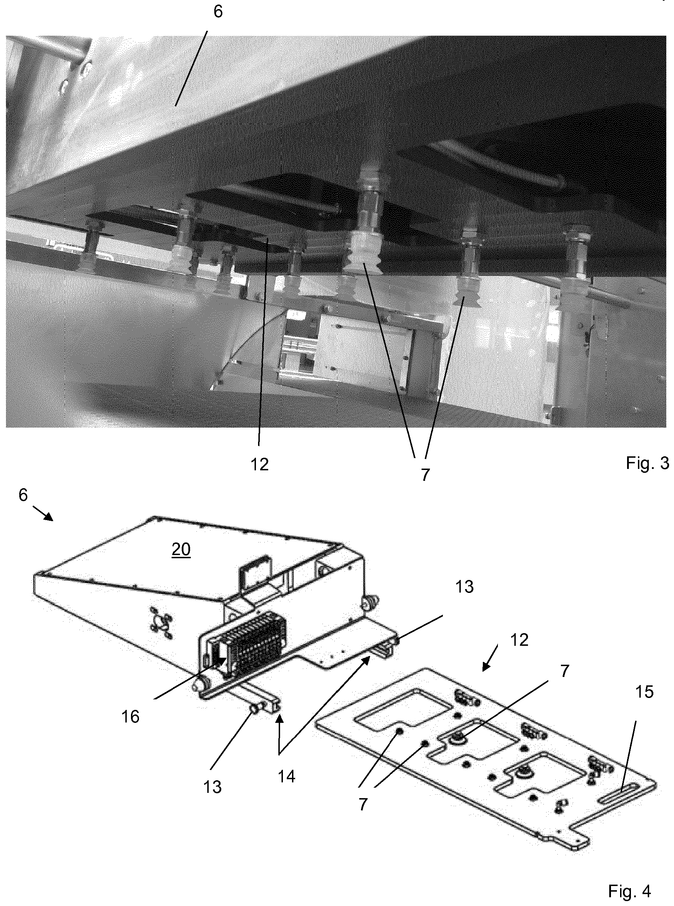

**Figures 4 - 6** show details of the gripper unit 6, which comprises a housing 20, and a tool 12, which is in the present case provided as a plate. At this tool, a multitude of grippers 7 is provided in a certain configuration, which is preferably tailormade for a specific application, i.e. adapted to the package(s) to be lifted. In the present case, three grippers, provided in a triangle, are utilized to lift one package and three packages can be lifted simultaneously. Furthermore, the tool may comprise a handle 15 and/or one or more, here three, recess(es) to reduce the weight of the tool and/or to simplify the inspection/maintenance of the tool. The housing preferably comprises guiding means 14, here U-shapes slots which guide the tool during installation and removal of the tool. It its operating position, the tool can be fixed by fixing means 13, which are released for removal of the tool from the housing. The inventive gripper unit may comprise a valve, particularly a valve-block 16 to provide the grippers individually and/or group-wise with energy, for example vacuum.

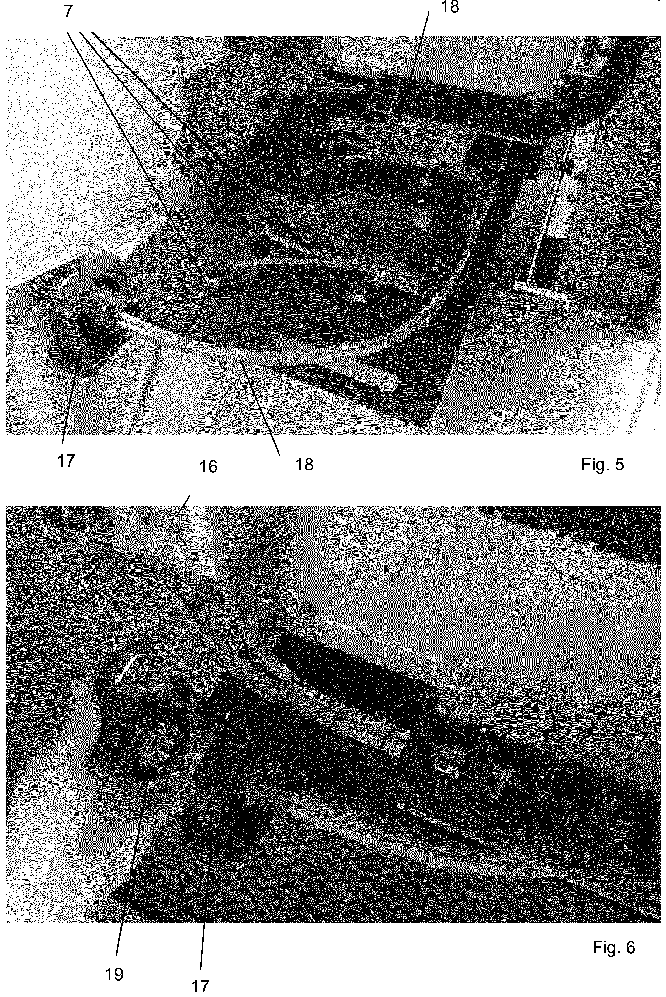

As can particularly seen from **Figure 5****,** at the tool, preferably a central connector 17 is provided. This connector can be connected to a vacuum-source and downstream from the connector 17, tubes 18 are provided, which connect the connector 17 with the individual grippers 7. Again, according to the present example, three grippers 7 are tube-wise combined to one group to lift one package and three packages can be lifted simultaneously.

**Figure 6** shows the plug 19 that is connected to the central connector 17. It can be seen that the plug comprises a multitude of sockets, which can be connected to corresponding recesses in the central connector 17. Hence, if needed each gripper 7 at the tool 12 can be supplied with vacuum individually. The plug is connected to the valve block, which shuts the vacuum for the individual gripper or an individual group of grippers on and off.

### List of reference signs:

- 1: End of line pick and place unit
- 2: Packaging machine
- 3: Infeed conveyor
- 4: Outfeed conveyor
- 5: Pusher
- 6: Gripper unit
- 7: Gripper, vacuum gripper
- 8: Frame
- 9: Guiding rod, vertical guiding rod
- 10: Guiding rod, horizontal guiding rod
- 11: Drive, horizontal drive
- 12: Tool, gripping tool
- 13: Fixation means
- 14: Guiding means
- 15: Handle
- 16: Valve, valve-block
- 17: Central connector
- 18: Tube
- 19: Plug
- 20: Housing of the gripper unit
- 21: Pitching conveyor

## Claims

1. Method to operate an end of line pick and place unit (1) which is located downstream from a packaging unit,
wherein the end of line pick and place unit (1) comprises an infeed conveyor (3), a gripper unit (6) comprising a multitude of grippers (7) and an outfeed conveyor (4),
wherein the infeed conveyor (3) transports a plurality n of packages side by side in a row towards the gripper unit (6),
wherein the multitude of grippers (7) grip at least one package simultaneously, lift it/them, transport it/ them and lower it/them on the outfeed conveyor (4) in a row with one or n-1 packages side by side, or less, wherein for lifting, and lowering, the entire gripper unit is moved,
**characterized in that** the end of line pick and place unit (1) and the packaging machine (2) exchange information, for example via a common control system,
wherein the information comprises information to synchronize the packaging machine (2) and the end of line pick and place unit (1) and data about deficient packages which need to be sorted out, because they are not sufficiently filled and/or the quality of the product in the package is not sufficient and/or the package is not properly closed and/or has a gas-atmosphere in the package which is not according to the specification,
wherein the end of line pick and place unit (1) gets data about the position of such a deficient package, particularly where it is located on the infeed conveyor (3),
wherein the gripper(s) (7) which is/are allocated to such a deficient package is/are then not activated, so that the deficient package is not lifted together with the gripper unit (6), but stays on the infeed conveyor (3), and
wherein the infeed conveyor (3) further advances, this deficient package drops from the infeed conveyor (3), for example in a waste bin.

2. Method according to claim 1, **characterized in that** the grippers (7) are provided stationary at the gripper unit (6).

3. Method according to one of the preceding claims, **characterized in, that** the gripper unit (6) is provided at a frame and that the frame is lowered and lifted.

4. Method according to one of the preceding claims, **characterized in, that** it comprises a guiding means (10) for a horizontal movement of the gripper unit.

5. Method according to one of the preceding claims, **characterized in, that** the grippers (7) are vacuum operated.

## Patentansprüche

1. Verfahren zum Betreiben einer Förderstreckenende-Pick-and-Place-Einheit (1), die sich stromabwärts einer Verpackungseinheit befindet,
wobei die Förderstreckenende-Pick-and-Place-Einheit (1) einen Zuförderer (3), eine Greifereinheit (6), die eine Vielzahl von Greifern (7) umfasst, und einen Abförderer (4) umfasst,
wobei der Zuförderer (3) eine Vielzahl n von Packungen nebeneinander in einer Reihe zu der Greifereinheit (6) hin transportiert,
wobei die Vielzahl von Greifern (7) mindestens eine Packung gleichzeitig ergreifen, anheben, transportieren und auf den Abförderer (4) in einer Reihe mit einer oder n-1 Packungen nebeneinander oder weniger absenken, wobei zum Anheben und Absenken die gesamte Greifereinheit bewegt wird,
**dadurch gekennzeichnet, dass** die Förderstreckenende-Pick-and-Place-Einheit (1) und die Verpackungsmaschine (2) Informationen austauschen, beispielsweise über ein gemeinsames Steuerungssystem,
wobei die Informationen Informationen zum Synchronisieren der Verpackungsmaschine (2) und der Förderstreckenende-Pick-and-Place-Einheit (1) und Daten über mangelhafte Packungen umfassen, die aussortiert werden müssen, weil sie nicht ausreichend gefüllt sind und/oder die Qualität des Produkts in der Packung nicht ausreichend ist und/oder die Packung nicht ordnungsgemäß geschlossen ist und/oder eine Gasatmosphäre in der Packung aufweist, die nicht der Spezifikation entspricht, wobei die Förderstreckenende-Pick-and-Place-Einheit (1) Daten über die Position einer solchen mangelhaften Packung erhält, insbesondere darüber, wo sie sich auf dem Zuförderer (3) befindet,
wobei der oder die Greifer (7), der/die einer solchen mangelhaften Packung zugeordnet ist/sind, dann nicht aktiviert werden, so dass die mangelhafte Packung nicht zusammen mit der Greifereinheit (6) angehoben wird, sondern auf dem Zuförderer (3) bleibt, und
wobei bei weiterem Vorschub des Zuförderers (3) diese mangelhafte Packung aus dem Zuförderer (3), beispielsweise in einen Abfallbehälter, fällt.

2. Verfahren nach Anspruch 1, **dadurch gekennzeichnet, dass** die Greifer (7) stationär an der Greifereinheit (6) vorgesehen sind.

3. Verfahren nach einem der vorhergehenden Ansprüche, **dadurch gekennzeichnet, dass** die Greifereinheit (6) an einem Rahmen vorgesehen ist und dass der Rahmen abgesenkt und angehoben wird.

4. Verfahren nach einem der vorhergehenden Ansprüche, **dadurch gekennzeichnet, dass** es ein Führungsmittel (10) für eine horizontale Bewegung der Greifereinheit umfasst.

5. Verfahren nach einem der vorhergehenden Ansprüche, **dadurch gekennzeichnet, dass** die Greifer (7) vakuumbetrieben sind.

## Revendications

1. Procédé pour faire fonctionner une unité bras-transfert d'extrémité de ligne (1) qui est située en aval d'une unité d'emballage,
l'unité bras-transfert d'extrémité de ligne (1) comprenant un convoyeur d'alimentation (3), une unité de préhension (6) comprenant une multitude de pinces (7) et un convoyeur de sortie (4),
le convoyeur d'alimentation (3) transportant une pluralité n d'emballages côte à côte dans une rangée vers l'unité de préhension (6),
la multitude de pinces (7) saisissant au moins un emballage simultanément, le levant, le transportant et l'abaissant sur le convoyeur de sortie (4) dans une rangée avec un ou n-1 emballages côte à côte, ou moins, pour le soulèvement et l'abaissement, l'unité de préhension entière étant déplacée,
**caractérisé en ce que** l'unité bras-transfert d'extrémité de ligne (1) et la machine d'emballage (2) échangent des informations, par exemple par l'intermédiaire d'un système de commande commun,
les informations comprenant des informations permettant de synchroniser la machine d'emballage (2) et l'unité bras-transfert d'extrémité de ligne (1), ainsi que des données sur les emballages défectueux qui doivent être triés parce qu'ils ne sont pas suffisamment remplis et/ou que la qualité du produit dans l'emballage n'est pas suffisante et/ou que l'emballage n'est pas correctement fermé et/ou a une atmosphère gazeuse dans l'emballage qui n'est pas conforme à la spécification,
l'unité bras-transfert d'extrémité de ligne (1) obtenant des données sur la position d'un tel emballage défectueux, en particulier où il est situé sur le convoyeur d'alimentation (3),
la ou les pinces (7) qui sont affectées à un tel emballage défectueux n'étant ensuite pas activées, de sorte que l'emballage défectueux ne soit pas levé avec l'unité de préhension (6), mais reste sur le convoyeur d'alimentation (3), et
lorsque le convoyeur d'alimentation (3) avance encore, cet emballage défectueux tombant du convoyeur d'alimentation (3), par exemple dans une poubelle.

2. Procédé selon la revendication 1, **caractérisé en ce que** les pinces (7) sont fournies de manière fixe au niveau de l'unité de préhension (6).

3. Procédé selon l'une quelconque des revendications précédentes, **caractérisé en ce que** l'unité de préhension (6) est fournie au niveau d'un cadre et **en ce que** le cadre est abaissé et levé.

4. Procédé selon l'une quelconque des revendications précédentes, **caractérisé en ce qu'**il comprend un moyen de guidage (10) pour un mouvement horizontal de l'unité de préhension.

5. Procédé selon l'une quelconque des revendications précédentes, **caractérisé en ce que** les pinces (7) fonctionnent sous vide.
